Europäisches Patentamt

European Patent Office

Office européen des brevets

(11) Numéro de publication: **0 270 438 B1**

# (12) FASCICULE DE BREVET EUROPEEN

(45) Date de publication de fascicule du brevet: **04.03.92**  (51) Int. Cl.⁵: **H02G 3/00**, H02B 1/00

(21) Numéro de dépôt: **87402581.0**

(22) Date de dépôt: **17.11.87**

(54) **Installation de distribution électrique et éléments constitutifs.**

(30) Priorité: **24.11.86 FR 8616308**

(43) Date de publication de la demande:
**08.06.88 Bulletin 88/23**

(45) Mention de la délivrance du brevet:
**04.03.92 Bulletin 92/10**

(84) Etats contractants désignés:
**AT BE CH DE ES FR GB GR IT LI NL**

(56) Documents cités:
**EP-A- 0 119 187**
**EP-A- 0 191 692**
**FR-A- 2 170 253**

(73) Titulaire: **HAGER ELECTRO S.A.**
**Boulevard d'Europe**
**F-67210 Obernai(FR)**

(72) Inventeur: **Bricka, Alfred**
**12 rue des Bosquets**
**F-67210 Obernai(FR)**

(74) Mandataire: **Lemoine, Michel et al**
**Cabinet Michel Lemoine et Bernasconi 13**
**Boulevard des Batignolles**
**F-75008 Paris(FR)**

## Description

La présente invention a trait à une installation de distribution électrique destinée aux réseaux électriques de bâtiments et locaux habités.

Les installations de distribution électrique dans les locaux habités se présentent traditionnellement sous forme d'un tableau de distribution qui est relié, au travers de moyens de protection tels que fusible, disjoncteur, etc... au réseau électrique BT (Basse Tension : en général 220 Volts). Ce tableau comporte des bornes de dérivation auxquelles se raccordent les différents circuits utilisateurs BT tels qu'éclairage, prises de courant, chauffage, etc...

L'utilisation de plus en plus fréquente d'appareils de commutation tels que télérupteurs, relais, coupe-circuit, minuteries, etc..., a conduit au développement de tableaux de distribution, dits tableaux d'abonné, comprenant généralement un cadre ou châssis fixé au mur et portant un ou des rails, susceptibles de recevoir lesdits appareils, et des barrettes ou borniers pour les connexions, l'ensemble étant recouvert d'un coffret ou capot agencé pour une présentation modulaire des différents éléments et appareils.

On a déjà cherché (voir par exemple brevet FR-A-2.170.253) à commander des appareils de commutation de type modulaire disposés dans un tel tableau à partir de moyens de commande reliés aux appareils de commutation par des circuits de commande à courant faible à très basse tension (TBT) en installant dans le circuit de commande TBT un convertisseur de découplage, relié à l'appareil de commutation associé par des lignes de faible tension comprise entre 4 et 24 Volts. Un tel dispositif nécessite l'utilisation de convertisseurs avec une sortie TBT.

La demande de brevet EP-A-0 191 692 décrit un dispositif permettant la commande très basse tension (TBT), dans lequel les circuits de commande TBT, éventuellement reliés des jeux de réglettes formant un bornier et pouvant éventuellement recevoir des moyens électroniques de traitement de signaux de commande, se trouvent reliés à un bloc de commutation modulaire comportant des bornes d'alimentation des circuits de commande TBT et des appareils de commutation, de préférence du type relais à optocoupleur, sensibles à ces circuits TBT et insérés dans les circuit BT de puissance. Un tel dispositif n'assure pas un découplage suffisant entre les réseaux BT et TBT et se présente sous une forme qui n'est pas toujours pratique pour l'installateur.

La présente invention se propose de remédier à ces inconvénients et de fournir une installation de distribution de courant électrique qui soit simple, pratique, qui permette d'acquérir des fonctions nouvelles et assure un découplage convenable entre les réseaux BT et TBT.

L'invention a pour objet une installation de distribution électrique suivant la revendication 1.

Les trajets des conducteurs TBT qui relient les modules de conversion du second compartiment au premier compartiment, d'une part, et les trajets des conducteurs BT, parcourus par des courants de faible intensité, qui relient les modules de conversion du second compartiment aux appareils de commutation ou autres éléments du premier tableau, d'autre part, sont avantageusement disposés selon deux zones séparées les unes des autres, de préférence avec interposition d'éléments assurant un cloisonnement physique.

On a ainsi réalisé un agencement dans lequel la totalité des circuits BT de puissance n'aboutissent qu'au premier tableau, tout élément TBT pouvant être éloigné de ce premier tableau, et les liaisons électriques entre le premier tableau de puissance et le second compartiment du second tableau s'effectuent, y compris pour les moyens d'alimentation TBT prévus dans le second tableau, par des liaisons BT de faible intensité, ces liaisons BT de faible intensité étant, en outre, séparées par isolation galvanique des liaisons TBT qui, en provenance du premier compartiment du second tableau, arrivent dans le second compartiment de celui-ci.

Ainsi, on peut faire aboutir dans le premier compartiment du second tableau des circuits ou réseaux TBT reliés à des capteurs, des organes de commande ou de visualisation, des réseaux téléphoniques, des réseaux informatiques ou autres, ces réseaux aboutissant à des modules de traitement des informations issues des capteurs et des organes de télécommande et, d'une façon générale, de ces réseaux, avec, si nécessaire, des modules de reconfiguration, ces modules permettant d'attribuer un ou plusieurs de ces organes ou réseaux TBT à des fonctions situées dans le premier tableau par l'intermédiaire des modules appropriés du second compartiment du second tableau.

D'une façon générale, les signaux distribués dans l'habitat peuvent transiter par les éléments contenus dans le premier compartiment.

Les éléments modulaires de conversion TBT/BT contenus dans le second compartiment du second tableau peuvent avoir une simple fonction de découplage de tension et d'isolation galvanique mais ils peuvent aussi, en variante, avoir en plus des fonctions de commutation pilotant et coordonnant les appareils de commutation, modulaires ou non, du premier tableau.

Le dispositif d'alimentation en très basse tension, situé dans le second compartiment, peut comporter, de façon avantageuse, un transformateur dont le primaire est relié, par des conducteurs BT de faible intensité, au premier tableau et dont le secondaire, soit directement, soit par le biais d'un circuit de stabilisation ou de tout autre circuit convenable, alimente en très basse tension l'ensemble des éléments TBT du premier compartiment qui demandent une telle alimentation. L'alimentation peut, en outre, comporter une batterie de secours avec circuit de chargement ou former un onduleur ou autre dispositif approprié pour l'alimentation des modules de traitement en courant TBT continu ou alternatif.

La disposition interne du second compartiment du second tableau peut être prévue de façon à former, par une paroi de subdivision, un sous-compartiment spécial pour l'alimentation et un autre sous-compartiment susceptible de recevoir les différents modules de conversion, ces modules pouvant être fixés, par exemple sur rail d'une façon en soi connue, ou par n'importe quel autre moyen de fixation.

Le premier compartiment comporte des moyens de réception des modules TBT de traitement, de reconfiguration ou autres modules, ces modules pouvant être par exemple du type carte à circuits imprimés ou modules enfermés dans un botier dont les dimensions et les plages, bornes ou connecteurs de liaison sont standardisés.

Le second tableau peut être constitué, le cas échéant, de deux parties mécaniquement indépendantes, à savoir une première partie, par exemple en forme de coffret, formant un second compartiment, les deux parties étant susceptibles d'être mises l'une à proximité immédiate de l'autre, de préférence en présentant un châssis destiné à être fixé contre une paroi et supportant les différents modules, appareils et bornes d'interconnexion, le cas échéant des parois de séparation de trajets TBT et BT, tandis qu'un coffret recouvrant le tout vient s'appliquer sur le châssis, le coffret étant muni d'ouvertures permettant le passage d'organes de commande manuels et la visualisation d'indicateurs ou autres éléments.

L'invention a également pour objet un tel second tableau défini ci-dessus.

D'autres avantages et caractéristiques de l'invention apparaîtront à la lecture de la description suivante, faite à titre d'exemple non limitatif et se référant au dessin annexé dans lequel :

la figure 1 représente une vue schématique en élévation d'une installation selon l'invention,

la figure 2 représente une vue en coupe II-II de la figure 1,

la figure 3 représente une vue en coupe III-III de la figure 1,

la figure 4 représente une vue en coupe IV-IV de la figure 1,

la figure 5 représente une vue schématique simplifiée de la connexion des différents éléments de l'installation dans le cas d'un circuit TBT unique,

la figure 6 représente une vue schématique simplifiée des connexions de l'installation dans un cas un peu plus complexe.

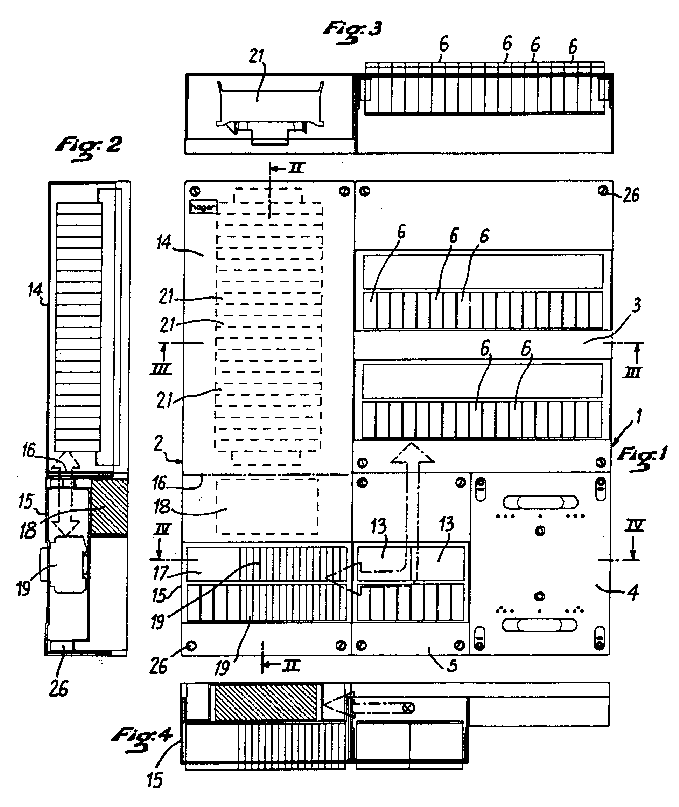

On se réfère tout d'abord aux figures 1 à 4.

Sur ces figures, les tableaux ont été représentés, dans un but de simplification, principalement par des coffrets, ces coffrets étant de forme parallélépipédique avec une grande face arrière et une grande face antérieure munie de passages pour les parties antérieures des appareils, comme cela est en soi connu. On doit comprendre que, dans la réalité, les coffrets représentés viennent se fixer sur des structures, par des vis rapides 26 dont les têtes sont représentées, aux quatre coins des coffrets sur la figure 1. Ces structures qui sont fixées sur le mur et qui reçoivent les coffrets présentent elles-mêmes des moyens de type connu tels que des rails sur lesquels on vient fixer les différents modules ou appareils modulaires, ainsi que des barrettes conductrices susceptibles de recevoir les extrémités de conducteurs pour assurer l'interconnexion des éléments, d'une façon également en soi connue.

L'installation selon l'invention comporte un premier tableau désigné dans son ensemble par 1 et un second tableau désigné dans son ensemble par 2. Ces tableaux sont disposés verticalement de façon adjacente comme on le voit sur la figure 1. Le tableau 1 est en fait formé d'une juxtaposition de trois parties, à savoir un tableau d'appareils de commutation 3 faisant office de coffret de distribution proprement dit, une platine de disjoncteur d'abonné 4 et un coffret multifonctions 5 destiné notamment au passage des conducteurs ou câbles de liaison BT-BT.

Dans ce qui suit, les liaisons câblées électriques, comportant en général les conducteurs de phase, de neutre et de terre, ont été représentées chaque fois par un seul trait.

Le coffret 3 du tableau 1 contient une pluralité d'appareils de commutation et de distribution usuels modulaires 6 de type tout à fait classique tels que relais, télérupteurs, minuteries, coupe-circuit, disjoncteurs, contacteurs, etc... Comme on le voit sur les figures 5 et 6, ces appareils 6 voient leurs bornes de puissance respectivement reliées par des liaisons 7, de préférence avec interposition d'organes de protection 8 contre les surintensités, qui peuvent d'ailleurs être également des appareils 6, à l'alimentation BT 9 en provenance du sous-tableau de disjoncteur d'abonné 4, et par des câbles BT correspondants 10 à des circuits de puissance du local tel que des circuits d'éclairage, de chauffage, de prise motrice, etc...

Par contre, les liaisons 11 de commande BT des appareils de commutation 6 ne restent pas dans le premier tableau mais traversent le coffret multifonctions 5 (dans lequel on peut éventuellement y interposer des appareils ou des bornes de dérivation, tous BT) d'où ils ressortent pour se diriger vers le second tableau 2. De même une liaison d'alimentation 12, provenant également du bornier d'alimentation 9 et traversant le coffret 3, rejoint les câbles de liaison 11 et chemine avec eux à travers le coffret multi-fonctions 5 du tableau 1 pour rejoindre la partie inférieure du tableau 2. On a représenté, par une double ligne en trait mixte sur la figure 1, le trajet de l'ensemble des liaisons BT 11 et 12 circulant dans le tableau 1 et aboutissant à la partie inférieure du tableau 2. Bien entendu, cette représentation est extrêmement schématique, les câbles s'étendant en fait sous forme de nappes plus ou moins étendues en largeur.

Le tableau 2 est divisé en deux compartiments, à savoir un premier compartiment supérieur 14 et un second compartiment inférieur 15, ces deux compartiments étant séparés l'un de l'autre par une paroi simple ou double. Dans l'exemple représenté, les deux compartiments 14, 15 sont formés par deux coffrets juxtaposés créant une double paroi de séparation 16. Le second compartiment 15 comporte des moyens tels que des rails pour supporter d'une part un transformateur BT/TBT 17 dont le primaire BT est alimenté par la liaison 12 et dont le secondaire TBT délivre une tension inférieure à 50 volts, par exemple de l'ordre de 4 Volts. La tension secondaire TBT est utilisée d'une part pour charger un module d'alimentation auxiliaire 18 comprenant un redresseur et une batterie pouvant, éventuellement, être structurée à la façon d'un onduleur si on désire utiliser un courant alternatif TBT à partir de la batterie. D'autre part, la sortie TBT du transformateur 17 alimente soit directement, soit, si on le désire, par l'intermédiaire du dispositif 18 structuré en onduleur, la totalité des dispositifs, modules et appareils TBT du tableau, comme cela est schématiquement représenté sur la figure 5.

Ce dispositif peut avantageusement être situé vers l'arrière par rapport aux modules de conversion pour assurer un cloisonnement entre le trajet des liaisons BT 11, 12 et celui des liaisons TBT aboutissant aux modules de conversion.

Dans le compartiment 15 sont également disposés des modules de conversion 19 dont les bornes de fonction BT reçoivent les extrémités des liaisons 11 et dont les bornes de commande, au contraire, reçoivent des conducteurs de commande TBT 20. Comme cela a été représenté schématiquement sur la figure 5, les modules de conversion sont de préférence du type opto-électronique ou à transformateur ou tout autre moyen assurant une isolation galvanique entre leurs liaisons de commande TBT 20 et leurs liaisons d'exécution 11 adressées vers les modules de commutation 6 du tableau 1.

Dans le premier compartiment 14 du tableau 2 sont fixés, sur des moyens de réception convenablement agencés dans la structure fixe du tableau 2, des modules de traitement TBT 21. Ces modules 21 peuvent être de natures extrêmement diverses. On voit par exemple sur les figures 5 et 6 qu'un module 21 est relié à un circuit d'actionnement TBT 22 aboutissant à un interrupteur manuel 23 ou autre organe de télécommande, et assure le traitement de l'instruction en provenance de l'organe 23 en fonction éventuellement d'autres instructions provenant d'autres éléments ou autres modules 21. Deux autres modules 21 représentés sur la figure 6 reçoivent une ligne téléphonique 24 qui peut être avantageusement la ligne téléphonique d'abonnement. Le module supérieur 21 joue par exemple un rôle de standard téléphonique assurant la gestion d'un réseau téléphonique intérieur de lignes 25 qui peut également comprendre des lignes informatiques. Le module de traitement intermédiaire 21 de la figure 6 également relié à la liaison téléphonique 24 adresse par une liaison 20 des instructions de commande TBT à l'un des modules de conversion 19 pour actionner l'un des appareils de commutation 6 qui assure par exemple la mise en marche d'un appareil de chauffage électrique sur instructions téléphoniques. Les différents modules 21 sont alimentés en tension TBT par une ligne 27 en provenance du secondaire du transformateur 17 et/ou du dispositif d'alimentation TBT 18. Bien entendu, les configurations et fonctions des modules 21 peuvent être extrêmement diverses.

On voit par ailleurs que les lignes ou câbles TBT 20, 27 qui quittent le second compartiment 15 du second tableau 2 pour se diriger vers le premier compartiment 14 peuvent être agencés selon le trajet représenté en trait mixte sur la figure 2, de sorte que la totalité de ces liaisons sont géométriquement séparées des trajets des liaisons BT 11, 12 qui quittent les modules 19 et le transformateur 17 pour se diriger latéralement, et de préférence à la partie inférieure du compartiment 15, vers le coffret 5 du premier tableau 1.

En outre, on voit que les circuits TBT extérieurs tels que 22, 24 et 25, aboutissent tous, sans exception, uniquement au premier compartiment 14 du second tableau, aucune liaison TBT ne pénétrant de l'extérieur dans le second compartiment 15 ni dans le premier tableau 1 et l'invention permet d'obtenir une séparation galvanique totale ainsi qu'un éloignement géométrique des parties TBT et BT. De plus, un effet de protection supplémentaire est assuré par le fait que les liaisons BT 11, 12, entre le premier tableau et le second compartiment du second tableau sont toutes des liaisons de faible intensité ayant uniquement des fonctions de commande BT, à l'exception de la ligne 12 d'alimentation qui n'est cependant parcourue que par un très faible courant du fait que l'alimentation TBT de l'ensemble de l'installation ne requiert qu'une puissance minime.

## Revendications

1. Installation de distribution électrique pour bâtiments et locaux habités, présentant des moyens de commutation de circuits basse tension BT de puissance, des moyens recevant des réseaux très basse tension TBT et des moyens de conversion assurant une isolation galvanique entre la basse tension BT et la très basse tension TBT, caractérisée par le fait qu'elle comporte, en combinaison, un premier tableau basse tension BT (1) de type usuel, recevant, de façon modulaire, des appareils de commutation BT (6) auxquels aboutissent des circuits BT de puissance (7), et un second tableau (2) situé à proximité, comportant un premier compartiment (14) recevant, de façon modulaire, des modules (21) de traitement de signaux très basse tension TBT auxquels aboutissent respectivement les réseaux TBT de l'installation (22, 24, 25), et un second compartiment (15) distinct du premier compartiment (14), contenant un dispositif d'alimentation TBT (17, 18) et recevant de façon modulaire des modules de conversion (19) ayant des premières bornes TBT reliées aux réseaux TBT et/ou aux modules de traitement TBT du premier compartiment (14) du second tableau (2), et des deuxièmes bornes BT reliées aux bornes de commande des appareils de commutation (6) BT du premier tableau (1), lesdits modules de conversion (19) assurant une isolation galvanique entre leur partie BT et leur partie TBT, les liaisons électriques (11) BT entre les bornes BT des modules de conversion (19) et les bornes de commande des appareils de commutation (6) du premier tableau, de même que la liaison (12) entre le dispositif d'alimentation TBT (17, 18) et le premier tableau (1) étant parcourues uniquement par de faibles intensités BT, lesdits premier et second tableau étant isolés l'un de l'autre par des moyens de cloisonnement, notamment du type coffret.

2. Installation selon la revendication 1, caractérisée en ce que les premier et second tableaux (1, 2) sont juxtaposés.

3. Installation selon l'une des revendications 1 et 2, caractérisée en ce que les trajets des liaisons BT (11, 12) parcourues par des courants de faible intensité et reliant les modules de conversion (19) aux éléments du premier tableau (1) et les trajets des liaisons TBT (20, 27) reliant les éléments contenus dans le second compartiment (15) du second tableau (2) aux éléments contenus dans le premier compartiment (14) du second tableau (2) sont disposés selon des zones géographiquement bien séparées les unes des autres.

4. Installation selon la revendication 3, caractérisée en en ce que le trajet des liaisons BT (11, 12) entre le premier tableau et le second compartiment du second tableau traverse un coffret multifonctions (5) du premier tableau avant d'aboutir au second tableau.

5. Installation selon l'une quelconque des revendications 1 à 4, caractérisée en ce que le tableau (2) est réalisé en deux tableaux juxtaposés (14, 15), créant une double séparation (16).

6. Installation selon l'une quelconque des revendications 1 à 4, caractérisée en ce que le premier compartiment (14) et le second compartiment (15) du second tableau (2) sont séparés par une paroi (16).

7. Installation selon l'une quelconque des revendications 1 à 6, caractérisée en ce que des modules de conversion (19) possèdent, en plus d'une fonction de conversion de tension, des fonctions de commutation.

8. Installation selon l'une quelconque des revendications 1 à 7, caractérisée en ce que le premier compartiment (14) du second tableau (2) reçoit des modules de traitement TBT (21) tels que des modules de traitement ou reconfiguration de signaux de réseau de télécommande, de capteur, de réseau téléphonique et/ou informatique.

9. Installation selon 1 une quelconque des revendications 1 à 8, caractérisée en ce que le dispositif d'alimentation comporte, outre un transformateur BT/TBT (17), un dispositif à batterie (18).

10. Installation selon la revendication 9, caractérisée en ce que le dispositif à batterie (18) est disposé en retrait par rapport au module de conversion (19) pour former un cloisonnement entre le trajet des liaisons BT (11, 12) entre le second compartiment (15) et le premier tableau (1) et le trajet TBT (20, 27) entre les premier et second compartiments du second tableau (2).

11. Tableau d'installation électrique, destiné à être juxtaposé à un tableau d'abonné (1) pour former une installation selon l'une quelconque des revendications précédentes, caractérisé en ce qu il est subdivisé en un premier compartiment (14) agencé pour recevoir de façon modulaire des modules de traitement TBT (21) et un second compartiment (15) distinct du premier, agencé pour recevoir des modules de conversion TBT/BT ainsi qu'un dispositif d'alimentation TBT (17, 18) et déterminant des trajets séparés pour les liaisons BT entre le second compartiment et le tableau (1) et le trajet TBT entre le second compartiment (15) et le premier compartiment (14).

**Claims**

1. An electricity distribution installation for inhabited premises and buildings, comprising switching means for low voltage BT power circuits , means for receiving very low voltage TBT networks and conversion means for galvanic insulation between the low voltage BT and the very low voltage TBT, characterised in that it comprises in combination a first low voltage BT panel (1) of conventional type receiving in modular fashion BT switching equipment (6) at which terminate low voltage BT power circuits (7) and a second panel (2) situated close by comprising a first compartment (14) receiving in modular fashion modules (21) for processing very low voltage TBT signals at which terminate respectively the TBT networks of the installation (22, 24, 25) and a second compartment (15) distinct from the first compartment (14), containing a TBT supply device (17, 18) and receiving in modular fashion conversion modules (19) having first TBT terminals connected to the TBT networks and/or to the TBT processing modules of the first compartment (14) of the second panel (2), and second BT terminals connected to the control terminals of the BT switching equipment (6) of the first panel (1), the said conversion modules (19) providing for galvanic insulation between their BT part and their TBT part, the BT electrical connections (11) between the BT terminals of the conversion modules (19) and the control terminals of the switching equipment (6) of the first panel, like the connection (12) between the TBT supply device (17, 18) and the first panel (1) being traversed solely by BT or low strength currents, the said first and second panels being insulated the one from the other by partitioning means, namely of the cabinet type.

2. An installation according to claim 1, characterised in that the first and second panels (1, 2) are juxtaposed.

3. An installation according to one of claims 1 and 2, characterised in that the paths of the BT connections (11, 12) traversed by low-strength currents and connecting the conversion modules (19) to the elements of the first panel (1) and the paths of the TBT connections (20, 27) connecting the elements contained in the second compartment (15) of the second panel (2) to the elements contained in the first compartment (14) of the second panel (Z) are disposed according to zones which are geographically quite separate from one another.

4. An installation according to claim 3, characterised in that the path of the BT connections (11, 12) between the first panel and the second compartment of the second panel passes through a multifunction cabinet (5) of the first panel before terminating at the second panel.

5. An installation according to any one of claims 1 to 4, characterised in that the panel 2 is constructed as two juxtaposed panels (14, 15) creating a double separation (16).

6. An installation according to any one of claims 1 to 4, characterised in that the first compartment (14) and the second compartment (15) of the second panel (2) are separated by a wall (16).

7. An installation according to any one of claims 1 to 6, characterised in that conversion modules (19) possess switching functions in addition to a voltage conversion function.

8. An installation according to any one of claims 1 to 7, characterised in that the first compartment (14) of the second panel (2) receives TBT processing modules (21) such as modules for processing or reconfiguring signals from a remote control network, a sensor, a telephone and/or data network.

9. An installation according to any one of claims 1 to 8, characterised in that the supply means comprises not only a BT/TBT transformer (17) but also a battery device (18).

10. An installation according to claim 9, characterised in that the battery device (18) is set back in relation to the conversion module (19) to form a partitioning between the path of the BT connections (11, 12) between the second compartment (15) and £he first panel (1) and the TBT path (20, 27) between the first and second compartments of the second panel (2).

11. An electrical installation intended to be juxtaposed with a subscriber panel (1) to form an installation according to any of the preceding claims, characterised in that it is sub-divided into a first compartment (14) arranged to receive in modular fashion TBT processing modules (21) and a second compartment (15) distinct from the first arranged to receive TBT/BT conversion modules and a TBT supply device (17, 18) and determining separate paths for the BT connections between the second compartment and the panel (1) and the TBT path between the second compartment (15) and the first compartment (14).

**Patentansprüche**

1. Einrichtung zur elektrischen Verteilung für Gebäude und bewohnte Örtlichkeiten, mit Schaltmitteln für Niederspannungs-Leistungs-Kreise BT, mit Netze sehr niedriger Spannung TBT aufnehmenden Mitteln und mit Wandler-Mitteln, die eine galvanische Trennung zwischen der Niederspannung BT und der sehr niedrigen Spannung TBT sicherstellen, gekennzeichnet durch die Kombination folgender Merkmale: eine erste Schalttafel (1) von üblicher Art für Niederspannung BT, die in Modulbauart Niederspannungs-Schaltgeräte (6) aufnimmt, zu denen Niederspannungs-Leistungs-Kreise (7) gehen, und eine in der Nähe gelegene zweite Schalttafel (2), die ein erstes Feld (14) aufweist, welches in Modulbauart Module (21) zur Verarbeitung von Signalen sehr niedriger Spannung TBT aufnimmt, zu denen jeweils die TBT-Netze der Einrichtung (22, 24, 25) gehen, und die ein von dem ersten Feld (14) unterschiedenes zweites Feld (15) aufweist, welches eine Speisevorrichtung (17, 18) für TBT enthält und in Modulbauart Wandler-Module (19) aufnimmt, mit ersten, mit den TBT-Netzen und/oder mit TBT-Verarbeitungs-Modulen des ersten Felder (14) der zweiten Schalttafel (2) verbundenen TBT-Klemmen und mit zweiten, mit Steuerklemmen der BT-Schaltgeräte (6) der ersten Schalttafel (1) verbundenen BT-Klemmen, wobei die besagten Wandler-Module (19) eine galvanische Trennung zwischen ihrem BT-Teil und ihrem TBT-Teil gewährleisten, wobei die elektrischen BT-Verbindungen (11) zwischen den BT-Klemmen der Wandler-Module (19) und den Steuerklemmen der Schaltgeräte (6) der ersten Schalttafel, ebenso wie die Verbindung (12) zwischen der TBT-Speisevorrichtung (17, 18) und der ersten Schalttafel (1) lediglich von schwachen BT-Stärken durchflossen sind und wobei die besagte erste und zweite Schalttafel voneinander durch Abschottungen, insbesondere kammerartig, isoliert sind.

2. Einrichtung nach Anspruch 1, dadurch gekennzeichnet, daß die erste Schalttafel (1) und die zweite Schalttafel (2) nebeneinander angeordnet sind.

3. Einrichtung nach einem der Ansprüche 1 und 2, dadurch gekennzeichnet, daß der jeweilige Verlauf der BT-Verbindungen (11, 12), die von Strömen geringer Intensität durchflossen sind und die Wandler-Module (19) mit den Elementen der ersten Schalttafel (1) verbinden, und der jeweilige Verlauf der TBT-Verbindungen (20, 27), die die im zweiten Feld (15) der zweiten Schalttafel (2) enthaltenen Elemente mit den im ersten Feld (14) der zweiten Schalttafel (2) enthaltenen Elementen verbinden, in Zonen angeordnet sind, die geographisch gut voneinander getrennt sind.

4. Einrichtung nach Anspruch 3, dadurch gekennzeichnet, daß der Verlauf der BT-Verbindungen (11, 12) zwischen der ersten Schalttafel und dem zweiten Feld der zweiten Schalttafel eine Mehrfunktions-Kammer (5) der ersten Schalttafel durchquert, bevor er zur zweiten Schalttafel geht.

5. Einrichtung nach einem der Ansprüche 1 bis 4, dadurch gekennzeichnet, daß die Schalttafel (2) in Form von zwei benachbarten Tafeln (14, 15) ausgeführt ist, die eine doppelte Trennung (16) ergeben.

6. Einrichtung nach einem der Ansprüche 1 bis 4, dadurch gekennzeichnet, daß das erste Feld (14) und das zweite Feld (15) der zweiten Schalttafel (2) durch eine Wand 16) voneinander getrennt sind.

7. Einrichtung nach einem der Ansprüche 1 bis 6, dadurch gekennzeichnet, daß die Wandler-Module (19) zusätzlich zu einer Spannungswandler-Funktion Schaltfunktionen besitzen.

8. Einrichtung nach einem der Ansprüche 1 bis 7, dadurch gekennzeichnet, daß das erste Feld (14) der zweiten Schalttafel (2) TBT-Verarbeitungs-Module aufnimmt, wie etwa Module zur Verarbeitung oder Formierung von Signalen eines Fernsteuer-Netzes, eines Aufnehmers, eines Telefon- und/oder Informationsnetzes.

9. Einrichtung nach einem der Ansprüche 1 bis 8, dadurch gekennzeichnet, daß die Speisevorrichtung außer einem BT/TBT-Transformator (17) eine Batterie-Vorrichtung (18) aufweist.

10. Einrichtung nach Anspruch 9, dadurch gekennzeichnet, daß die Batterie-Vorrichtung (18) gegenüber dem Wandler-Modul (19) versetzt angeordnet ist, um eine Abschottung zwischen dem Verlauf der BT-Verbindungen (11, 12) zwischen dem zweiten Feld (15) und der ersten Schalttafel (1) und dem TBT-Verlauf (20, 27) zwischen dem ersten und dem zweiten Feld der zweiten Schalttafel (2) zu bilden.

11. Elektrische Installations-Schalttafel, dazu bestimmt, neben einer Bezieher-Schalttafel (1) angeordnet zu werden, um eine Einrichtung nach einem oder mehreren der voraufgehenden Ansprüche zu bilden, dadurch gekennzeichnet, daß sie unterteilt ist in ein erstes Feld (14), das zur Aufnahme von TBT-Verarbeitungs-Modulen (21) in Modulbauart eingerichtet ist, und in ein zweites, vom ersten unterschiedenes Feld (15), das zur Aufnahme von TBT/BT-Wandler-Modulen eingerichtet ist, sowie einer TBT-Speisevorrichtung (17, 18), wobei getrennte Verläufe für die BT-Verbindungen zwischen dem zweiten Feld und der Schalttafel (1) und dem TBT-Verlauf zwischen dem zweiten Feld (15) und dem ersten Feld (14) festgelegt sind.

Fig.3

Fig.2

Fig.1

Fig.4